# EUROPEAN PATENT APPLICATION

(11) **EP 4 494 740 A1**
(43) Date of publication of application: **22.01.2025**
(21) Application number: 23791870.1
(22) Date of filing: 18.04.2023
(51) Int. Cl.: B01D 53/14, C01B 32/50

(54) **AMINE COMPOSITION FOR CARBON DIOXIDE SEPARATION USE**

(30) Priority: 19.04.2022 JP 2022068989
(71) Applicant: TOSOH CORPORATION, Shunan-shi, Yamaguchi 746-8501 (JP)
(72) Inventor: FUJIWARA Hiroshi, Shunan-shi Yamaguchi 746-8501 (JP); YAMAMOTO Atsushi, Shunan-shi Yamaguchi 746-8501 (JP); FUJII Ryotaro, Shunan-shi Yamaguchi 746-8501 (JP); YANASE Manabu, Shunan-shi Yamaguchi 746-8501 (JP)
(74) Representative: Novagraaf International SA
(86) International application number: PCT/JP2023/015529
(87) International publication number: WO 2023/204222

(57) **Abstract**

There is a problem that conventionally known carbon dioxide absorption liquids using aqueous solutions of N,N,N',N",N"-pentamethyldiethylenetriamine will have a low carbon dioxide emission rate.

A composition for carbon dioxide separation use is used which includes: an amine compound (A) represented by General Formula (1) or (2) as described in the specification; an amine compound (B) represented by General Formula (3) as described in the specification; and water, in which the composition for carbon dioxide separation use may further contain an amine compound (C) represented by General Formula (4) as described in the specification, and the number of moles of nitrogen atoms (nitrogen atoms of tertiary amino groups) contained in the amine compounds (A) and (C) is within a range of 1.0 to 8.0 times the number of moles of nitrogen atoms (nitrogen atoms of secondary amino groups) contained in the amine compound (B).

## Description

### Technical Field

This invention relates to a composition for carbon dioxide separation use for separating carbon dioxide from a mixed gas containing carbon dioxide.

### Background Art

In recent years, the separation and recovery of carbon dioxide has been attracting attention due to the problem of global warming, and carbon dioxide absorption liquids has been actively developed.

Monoethanolamine aqueous solution is the most common carbon dioxide absorption liquid. Monoethanolamine is inexpensive and easily obtained industrially, but it has the characteristic of not emitting carbon dioxide absorbed at low temperatures unless it is heated to 120°C or higher. Thus, if the carbon dioxide emission temperature is set to be higher than or equal to the boiling point of water, more energy will be required to recover carbon dioxide due to the high latent and specific heat of water.

This has led to the development of amines with lower carbon dioxide emission temperatures and lower carbon dioxide recovery energies than those of monoethanolamine. For example, N,N,N',N",N"-pentamethyldiethylenetriamine (Patent Literature 1) has been proposed.

### Citation List

### Patent Literature

[Patent Literature 1] Published Japanese Translation No. 2018-531147 of the PCT International Publication

### Summary of Invention

### Technical Problem

There is a problem that conventionally known carbon dioxide absorption liquids using aqueous solutions of N,N,N',N",N"-pentamethyldiethylenetriamine will have low carbon dioxide emission performance. Separation and recovery of carbon dioxide are achieved through a repetition of (i) absorption of carbon dioxide from a mixed gas into an absorption liquid and (ii) emission of carbon dioxide absorbed in the absorption liquid. In a case where the carbon dioxide emission performance is low, problems may arise in that the energy required for the emission step (ii) will increase and the energy efficiency of the entire carbon dioxide separation and recovery process will decrease. The present invention has been made in consideration of the above-described problems, and an object of the present invention is to provide a composition for carbon dioxide separation use with high carbon dioxide emission performance and a carbon dioxide separation method.

### Solution to Problem

The present inventors have conducted extensive studies to solve the above-described problems, and as a result, the present inventors have found that a composition for carbon dioxide separation use containing a specific amine compound and a specific amine compound can solve the above-described problems, thus leading to realization of the present invention.

In other words, the present invention relates to [1] to [7] below.
[1] A composition for carbon dioxide separation use, including: an amine compound (A) represented by General Formula (1) or (2) below; an amine compound (B) represented by General Formula (3) below; and water, in which the composition for carbon dioxide separation use may further contain an amine compound (C) represented by General Formula (4) below, and the number of moles of nitrogen atoms (nitrogen atoms of tertiary amino groups) contained in the amine compounds (A) and (C) is within a range of 1.0 to 8.0 times the number of moles of nitrogen atoms (nitrogen atoms of secondary amino groups) contained in the amine compound (B). 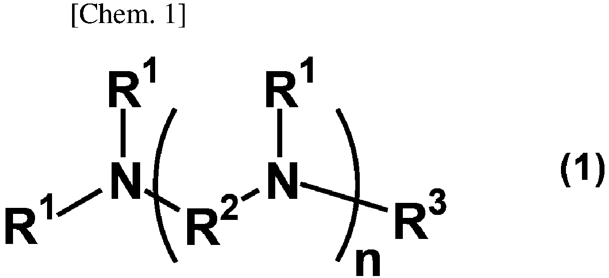 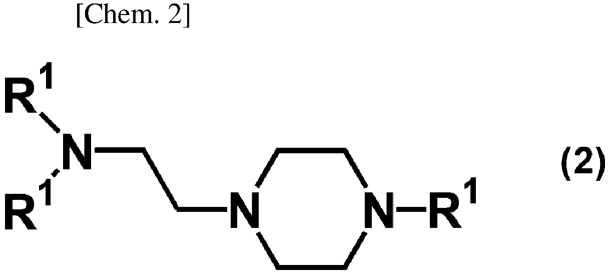
   [In General Formulae (1) and (2) above, R¹'s each independently represent a C1-3 alkyl group, R² represents a C2-6 alkylene group or an oxybisalkylene group having a total number of carbon atoms of 2 to 6, R³ represents a C1-3 alkyl, 2-hydroxyethyl, or 2-hydroxypropyl group, and n represents an integer of 1 to 4.] 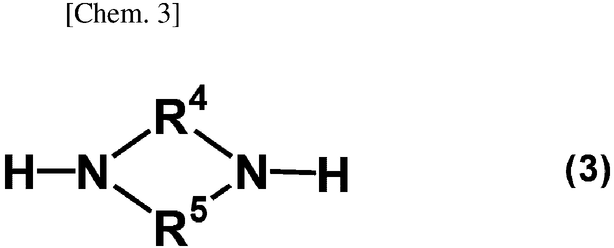
   [In General Formula (3) above, R⁴ and R⁵ each independently represent a C2-3 alkylene group.] 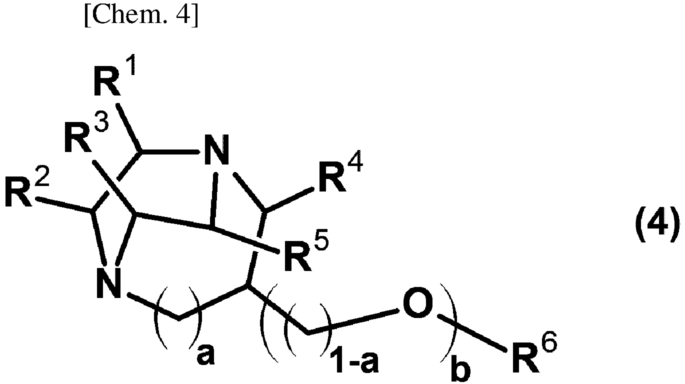
   [In General Formula (4) above, R¹ to R⁶ each independently represent a hydrogen atom or a C1-3 alkyl group, and a and b each independently represent 0 or 1.]
[2] The composition for carbon dioxide separation use according to [1] above, in which the above-described amine compound (A) is at least one amine compound (A) selected from the group consisting of N,N,N',N'-tetramethylethylenediamine, N,N,N',N"N"-pentamethyldiethylenetriamine, N,N,N',N",N"-pentamethyldipropylenetriamine, N,N,N',N",N‴,N‴-hexamethyltriethylenetetramine, N,N,N',N'-tetramethylhexylenediamine, 2-[[2-(dimethylamino)ethyl]methylamino]ethanol, bis(2-dimethylaminoethyl) ether, N-(2-hydroxypropyl)-N,N',N",N"-tetramethyldiethylenetriamine, and 1-(2-dimethylaminoethyl)-4-methylpiperazine.
[3] The composition for carbon dioxide separation use according to [1] or [2] above, in which the above-described amine compound (B) is piperazine or homopiperazine.
[4] The composition for carbon dioxide separation use according to any one of [1] to [3] above, in which the above-described amine compound (C) is 1,4-diazabicyclo[2.2.2]octane-2-methanol or 1,4-diazabicyclo [2.2.2] octane.
[5] The composition for carbon dioxide separation use according to any one of [1] to [4] above, in which the concentration of water is 30 to 95 mass% in the entire composition for carbon dioxide separation use.
[6] A carbon dioxide separation method including: a step of bringing a gas containing carbon dioxide into contact with the composition for carbon dioxide separation use according to any one of [1] to [5] above to cause carbon dioxide in the mixed gas to be absorbed in the composition for carbon dioxide separation use.
[7] A carbon dioxide separation method including: a step of bringing a gas containing carbon dioxide into contact with the composition for carbon dioxide separation use according to any one of [1] to [5] above to cause carbon dioxide in the mixed gas to be absorbed in the composition for carbon dioxide separation use; and a step of heating and/or depressurizing the composition for carbon dioxide separation use that has absorbed carbon dioxide to emit carbon dioxide from the composition for carbon dioxide separation use.

### Advantageous Effects of Invention

The composition for carbon dioxide separation use of the present invention is characterized by a faster carbon dioxide emission rate per unit mass and superior carbon dioxide emission performance compared to the conventionally known material and has the effect of being able to subject a large amount of carbon dioxide to absorption and separation processing. Therefore, the present invention is significantly useful industrially in that carbon dioxide in an exhaust gas exhausted in large amounts from large-scale thermal power generation can be efficiently separated, thereby increasing the efficiency of the entire carbon dioxide separation and recovery process.

### Description of Embodiment

Hereinafter, the present invention will be described in detail.

First, the composition for carbon dioxide separation use of the present invention will be described.

The composition for carbon dioxide separation use of the present invention relates to a composition for carbon dioxide separation use, including: an amine compound (A) represented by General Formula (1) or (2) above; an amine compound (B) represented by General Formula (3) above; and water, in which the composition for carbon dioxide separation use may further contain an amine compound (C) represented by General Formula (4) above, and the number of moles of nitrogen atoms (nitrogen atoms of tertiary amino groups) contained in the amine compounds (A) and (C) is within a range of 1.0 to 8.0 times the number of moles of nitrogen atoms (nitrogen atoms of secondary amino groups) contained in the amine compound (B).

In the present invention, the amine compound (A) represented by General Formula (1) or (2) above, the amine compound (B) represented by General Formula (3) above, and the amine compound (C) represented by General Formula (4) above are all responsible for adsorbing or emitting carbon dioxide.

**In** General Formula (1) or (2) above, R¹'s each independently represent a C1-3 alkyl group, R² represents a C2-6 alkylene group or an oxybisalkylene group having a total number of carbon atoms of 2 to 6, R³ represents a C1-3 alkyl, 2-hydroxyethyl, or 2-hydroxypropyl group, and n represents an integer of 1 to 4.

**In** General Formula (1) or (2) above, R¹ may fall within the above-described definition and is not particularly limited, but can each independently be, for example, a methyl group, an ethyl group, an n-propyl group, or an isopropyl group. Of these, R¹ is preferably a methyl group in terms of excellent carbon dioxide emission efficiency.

**In** General Formula (1) above, R² may fall within the above-described definition and is not particularly limited, but can be, for example, an ethylene group, an n-propylene group, an n-butylene group, an n-pentylene group, an n-hexylene group, or an ethyleneoxyethylene group. Of these, in terms of excellent carbon dioxide emission efficiency, R² is preferably an ethylene group, an n-propylene group, an n-hexylene group, or an ethyleneoxyethylene group and more preferably a 1,2-ethylene group, a 1,2-propylene group, a 1,3-propylene group, a 1,6-hexylene group, or an ethyleneoxyethylene group.

In General Formula (1) above, R³ may fall under the above-described definition and is not particularly limited, but can be, for example, a methyl group, an ethyl group, an n-propyl group, an isopropyl group, a 2-hydroxyethyl group, or a 2-hydroxypropyl group. Of these, in terms of excellent carbon dioxide emission efficiency, the R³ is preferably a methyl group, a 2-hydroxyethyl group, or a 2-hydroxypropyl group.

Specific examples of the amine compound (A) represented by General Formula (1) or (2) above include at least one selected from the group consisting of N,N,N',N'-tetramethylethylenediamine, N,N,N',N"N"-pentamethyldiethylenetriamine, N,N,N',N",N"-pentamethyldipropylenetriamine, N,N,N',N",N‴,N"'-hexamethyltriethylenetetramine, N,N,N',N'-tetramethylhexylenediamine, 2-[[2-(dimethylamino)ethyl]methylamino]ethanol, bis(2-dimethylaminoethyl) ether, N-(2-hydroxypropyl)-N,N',N",N"-tetramethyldiethylenetriamine, and 1-(2-dimethylaminoethyl)-4-methylpiperazine. 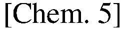 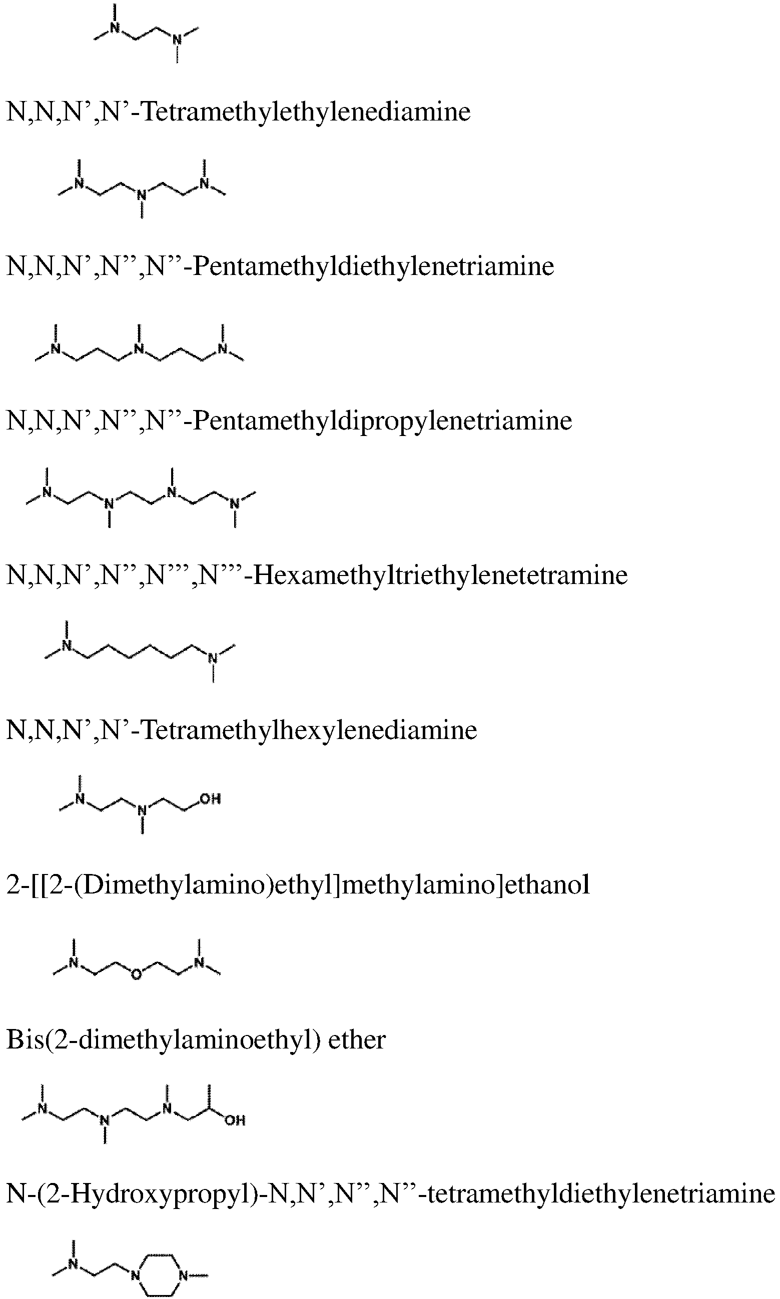 1-(2-Dimethylaminoethyl)-4-methylpiperazine

In General Formula (3) above, R⁴ and R⁵ each independently represent a C2-3 alkylene group.

In General Formula (3) above, R⁴ and R⁵ may fall under the above-described definitions and are not particularly limited, but can be, for example, an ethylene group or a propylene group. For R⁴ and *R⁵,* a 1,2-ethylene group, a 1,2-propylene group, or a 1,3-propylene group is preferable in terms of excellent carbon dioxide emission efficiency.

Specific examples of the amine compound (B) represented by General Formula (3) above include piperazine or homopiperazine.

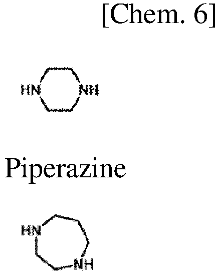

### Homopiperazine

In addition, the composition for carbon dioxide separation use of the present invention essentially contains the amine compound (A) and the amine compound (B), but in addition to these, it may further contain the amine compound (C) represented by General Formula (4) above.

In General Formula (4) above, R¹ to R⁶ each independently represent a hydrogen atom or a C1-3 alkyl group.

In General Formula (4) above, R¹ to R⁶ may fall under the above-described definition and are not particularly limited, but can each independently be, for example, a hydrogen atom, a methyl group, an ethyl group, an n-propyl group, or an isopropyl group, and are preferably a hydrogen atom in terms of excellent carbon dioxide emission efficiency.

In General Formula (4) above, a and b each independently represent 0 or 1.

When a=1 and b=1, General Formula (4) above is represented by General Formula (4a) below. 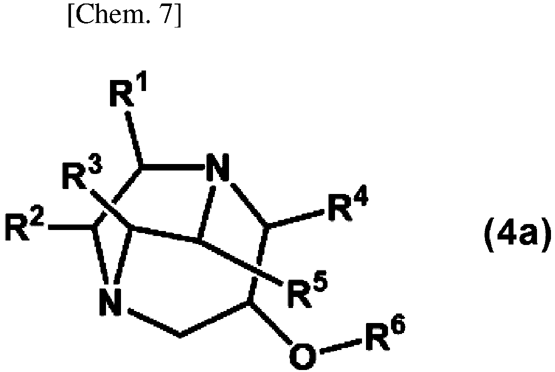 [In General Formula (4a) above, the definitions and preferred ranges of R¹ to R⁶ are synonymous with the definitions and preferred ranges of R¹ to R⁶ shown in General Formula (4) above.]

When a=0 and b=1, General Formula (4) above is represented by General Formula (4b) below. 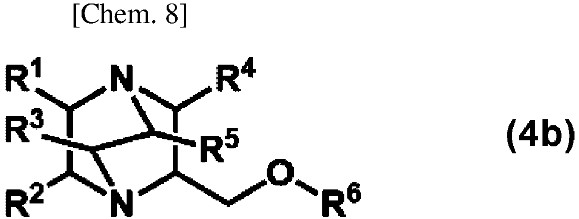 [In General Formula (4b) above, the definitions and preferred ranges of R¹ to R⁶ are synonymous with the definitions and preferred ranges of R¹ to R⁶ shown in General Formula (4) above.]

When a=0 and b=0, General Formula (4) above is represented by General Formula (4c) below. 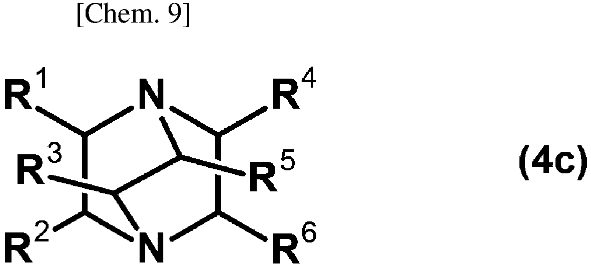 [In General Formula (4c) above, the definitions and preferred ranges of R¹ to R⁶ are synonymous with the definitions and preferred ranges of R¹ to R⁶ shown in General Formula (4) above.]

Specific examples of amine compounds represented by General Formula (4) above include the following compounds (exemplary compounds 1 to 21), but the present invention is not limited to these.

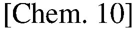

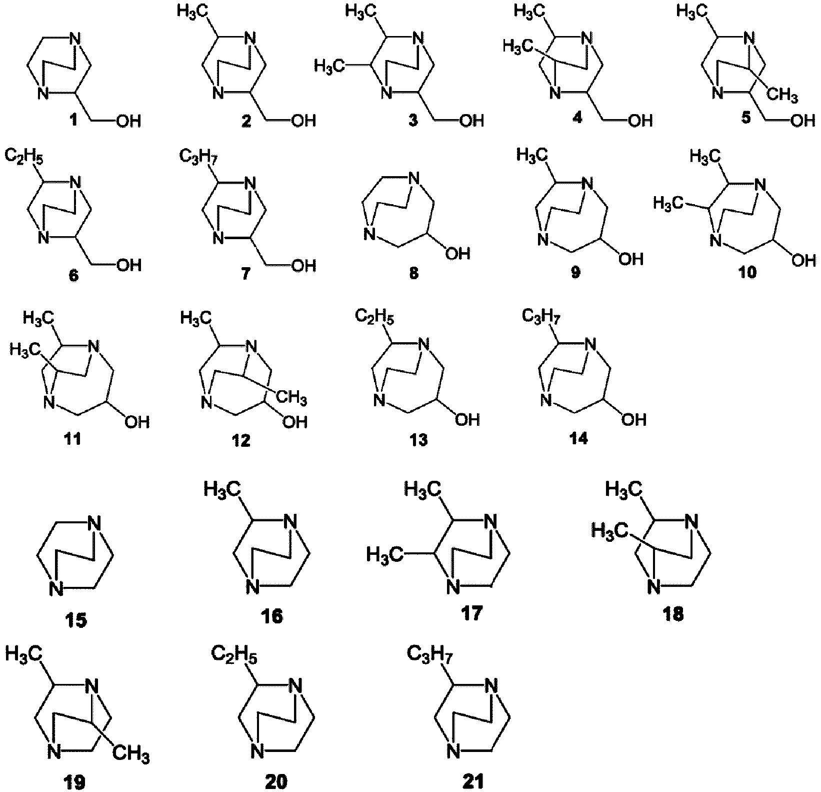

For the amine compounds represented by General Formula (4) above, in terms of excellent carbon dioxide emission efficiency, 1,4-diazabicyclo[2.2.2]octane-2-methanol (R¹=R²=R³=R⁴=R⁵=R⁶=hydrogen atom, a=0, b=1, exemplary compound 1) or 1,4-diazabicyclo[2.2.2]octane (R¹=R²=R³=R⁴=R⁵=R⁶=hydrogen atom, a=0, b=0, exemplary compound 15) is preferable.

In the present invention, the amine compounds (A), (B), and (C) may be commercially available or synthesized through a well-known method, and are not particularly limited. In addition, the purity of these amine compounds is not particularly limited, but the purity of each of them is preferably 95% or higher and particularly preferably 99% or higher.

For the composition for carbon dioxide separation use of the present invention, the number of moles of nitrogen atoms (nitrogen atoms of tertiary amino groups) contained in the amine compounds (A) and (C) is within a range of 1.0 to 8.0 times the number of moles of nitrogen atoms (nitrogen atoms of secondary amino groups) contained in the amine compound (B).

In terms of excellent carbon dioxide emission efficiency, the number of moles of nitrogen atoms (nitrogen atoms of tertiary amino groups) contained in the amine compounds (A) and (C) is preferably 1.2 to 6.0 times, more preferably 1.4 to 4.0 times the number of moles of nitrogen atoms (nitrogen atoms of secondary amino groups) contained in the amine compound (B).

The composition for carbon dioxide separation use of the present invention contains water in addition to the amine compounds. The incorporation of water in the composition for carbon dioxide separation use of the present invention facilitates bicarbonate ionization of absorbed carbon dioxide, thereby increasing the amount of carbon dioxide absorbed by the composition for carbon dioxide separation use.

Examples of the types of water include tap water, ion exchange water, and distilled water, and any of these types of water may be used.

As for the concentration of water, a range of 30 to 95 mass% of the total amount of the composition for carbon dioxide separation use is preferable, and a range of 40 to 80 mass% thereof is more preferable.

In addition to the amine compound (A), the amine compound (B), and the amine compound (C), the composition for carbon dioxide separation use of the present invention may also contain at least one amine compound (D) which is different from the amine compounds and selected from the group consisting of alkanolamines, propylenediamines, piperazines, piperidines, morpholines, pyrrolidines, azepanes, and polyethylene polyamines. The coexistence of the amine compound (D) may increase the N atom content per unit mass of the composition for carbon dioxide separation use, which may be industrially advantageous in that the amount of carbon dioxide absorbed per unit mass of the composition for carbon dioxide separation use can be expected to increase.

In the present invention, specific examples of the alkanolamines include ethanolamine, N-methylethanolamine, N,N-dimethylethanolamine, diethanolamine, 2-(2-aminoethoxy)ethanol, 2-[2-(dimethylamino)ethoxy]ethanol, 2-[2-(diethylamino)ethoxy]ethanol, N-[2-(2-aminoethoxy)ethyl]ethanolamine, N-[2-{2-(dimethylamino)ethoxy}ethyl]-N-methylethanolamine or N-[2-{2-(diethylamino)ethoxy}ethyl], and N-ethylethanolamine. Of these, as for the alkanolamines, at least one selected from the group consisting of ethanolamine, N-(2-aminoethyl) ethanolamine, and 2-(2-aminoethoxy) ethanol is preferable in that the amount of carbon dioxide absorbed per unit mass of the composition for carbon dioxide separation use can be expected to increase.

In the present invention, specific examples of the propylenediamines include for example. Of these, 1,3-bis(dimethylamino)propane ethanolamine is preferable as the propylenediamines in terms of easy availability and production costs.

In the present invention, specific examples of the piperazines include 1-(2-hydroxyethyl)-4-methylpiperazine, 1-(2,3-dihydroxypropyl)-4-methylpiperazine, 1-(2,3-dihydroxypropyl)-4-ethylpiperazine, 1-(2,3-dihydroxypropyl)-4-propylpiperazine, 1-(2,3-dihydroxypropyl)-4-butylpiperazine, 1-(2-hydroxy-3-methoxypropyl)-4-methylpiperazine, 1-(2-hydroxy-3-methoxypropyl)-4-ethylpiperazine, 1-(2-hydroxy-3-methoxypropyl)-4-propylpiperazine, 1-(2-hydroxy-3-methoxypropyl)-4-butylpiperazine, 1-(2,3-dimethoxypropyl)-4-methylpiperazine, 1-(2,3-dimethoxypropyl)-4-ethylpiperazine, 1-(2,3-dimethoxypropyl)-4-propylpiperazine, 1-(2,3-dimethoxypropyl)-4-butylpiperazine, and 1,4-diazabicyclo [2.2.2] octane.

In the present invention, specific examples of the piperidines include piperidine, 2-methylpiperidine, 1-(2,3-dihydroxypropyl)piperidine, 1-(2,3-dihydroxypropyl)-4-methylpiperidine, 1-(2,3-dihydroxypropyl)-4-ethylpiperidine, 1-(2,3-dihydroxypropyl)-4-propylpiperidine, 1-(2,3-dihydroxypropyl)-4-butylpiperidine, 1-(2-hydroxy-3-methoxypropyl)piperidine, 1-(2-hydroxy-3-methoxypropyl)-4-methylpiperidine, 1-(2-hydroxy-3-methoxypropyl)-4-ethylpiperidine, 1-(2-hydroxy-3-methoxypropyl)-4-propylpiperidine, 1-(2-hydroxy-3-methoxypropyl)-4-butylpiperidine, 1-(2,3-dimethoxypropyl)piperidine, 1-(2,3-dimethoxypropyl)-4-methylpiperidine, 1-(2,3-dimethoxypropyl)-4-ethylpiperidine, 1-(2,3-dimethoxypropyl)-4-propylpiperidine, or 1-(2,3-dimethoxypropyl)-4-butylpiperidine.

In the present invention, specific examples of the morpholines include morpholine, 2-methylmorpholine, 2,6-dimethylmorpholine, 1-(2,3-dihydroxypropyl)morpholine, 1-(2-hydroxy-3-methoxypropyl)morpholine, and 1-(2,3 (2,3-dimethoxypropyl)morpholine.

In the present invention, specific examples of pyrrolidines include pyrrolidine, 2-methylpyrrolidine, 2,5-dimethylpyrrolidine, 1-(2,3-dihydroxypropyl)pyrrolidine, 1-(2-hydroxy-3-methoxypropyl)pyrrolidine, 1-(2,3-dimethoxypropyl)pyrrolidine, and 1,5-diazabicyclo[4.3.0]-5-nonene.

In the present invention, specific examples of the azepanes include azepane, 2-methylazepane, 2,7-dimethylazepane, and 1,8-diazabicyclo[5.4.0]-7-undecene.

In the present invention, specific examples of the polyethylene polyamines include diethylene triamine (DETA), triethylene tetramine (TETA), tetraethylene pentamine (TEPA), pentaethylene hexamine (PEHA), hexaethylene heptamine (HEHA), and polyethylene polyamines with 8 or more amino groups.

The term "TETA" refers to a compound in which four amino groups are linked in a linear or branched shape via ethylene chains. In the present invention, a compound that similarly has four amino groups and a piperazine ring structure is also included. Specific examples of compound names for TETA include 1,4,7,10-tetraazadecane, N,N-bis(2-aminoethyl)-1,2-ethanediamine, 1-[2-[(2-aminoethyl)amino]ethyl]piperazine, and 1,4-bis(2-aminoethyl)piperazine.

In addition, the term "TEPA" refers to a compound in which five amino groups are linked in a linear or branched shape via ethylene chains. In the present invention, a compound that similarly has five amino groups and a piperazine ring structure is also included. Specific examples of compound names for TEPA include 1,4,7,10,13-pentaazatridecane, N,N,N'-tris(2-aminoethyl)-1,2-ethanediamine, 1-[2-[2-[2-[(2-aminoethyl)amino]ethyl]amino]ethyl]piperazine, 1-[2-[bis(2-aminoethyl)amino]ethyl]piperazine, and bis[2-(1-piperazinyl)ethyl]amine.

In addition, the term "PEHA" refers to a compound in which six amino groups are linked in a linear or branched shape via ethylene chains. In the present invention, a compound that similarly has six amino groups and a piperazine ring structure is also included. Specific examples of compound names for PEHA include 1,4,7, 10, 13, 16-hexaazahexadecane, N,N,N',N'-tetrakis(2-aminoethyl)-1,2-ethanediamine, N,N-bis(2-aminoethyl)-N'-[2-[(2-aminoethyl)amino]ethyl]-1,2-ethanedi amine, 1-[2-[2-[2-[2-[2-[(2-aminoethyl)amino]ethyl]amino]ethyl]amino]ethyl]p iperazine, 1-[2-[2-[2-[bis(2-aminoethyl)amino]ethyl]amino]ethyl]piperazine, and N,N'-bis[2-(1-piperazinyl)ethyl]-1,2-ethanediamine.

In addition, the term "HEHA" refers to a compound in which seven amino groups are linked in a linear or branched shape via ethylene chains. In the present invention, a compound that similarly has seven amino groups and a piperazine ring structure is also included. Specific examples of compound names for HEHA include 1,4,7,10,13,16,19-heptaazanonadecane, N-[2-[(2-aminoethyl)amino]ethyl]-N,N',N'-tris(2-aminoethyl)-1,2-etha nediamine, 1-[2-[2-[2-[2-[2-[2-[(2-aminoethyl)amino]ethyl]amino]ethyl]amino]ethy l]amino]ethyl]piperazine, and N-(2-aminoethyl)-N,N'-bis[2-(1-piperazinyl)ethyl]-1,2-ethanediamine.

In addition, the expression "polyethylene polyamines with 8 or more amino groups" refers to compounds in which eight or more amino groups are linked in a linear or branched shape via ethylene chains. In the present invention, compounds that similarly have eight or more amino groups and a piperazine ring structure is also included. Specific examples of polyethylene polyamines with 8 or more amino groups include trade name "Poly-8" (manufactured by Tosoh Corporation) and polyethyleneimine.

Of these, from the viewpoint that the amount of carbon dioxide absorbed per unit mass of the composition for carbon dioxide separation use can be expected to increase, polyethylene polyamines are preferably at least one selected from the group consisting of diethylene triamine (DETA), triethylene tetramine (TETA) consisting of a mixture of 1,4,7,10-tetraazadecane, N,N-bis(2-aminoethyl)-1,2-ethanediamine, 1-[2-[(2-aminoethyl)amino]ethyl]piperazine, and 1,4-bis(2-aminoethyl)piperazine, tetraethylene pentamine (TEPA) consisting of a mixture of 1,4,7,10,13-pentaazatridecane, N,N,N'-tris(2-aminoethyl)-1,2-ethanediamine, 1-[2-[2-[2-[(2-aminoethyl)amino]ethyl]amino]ethyl]piperazine, 1-[2-[bis(2-aminoethyl)amino]ethyl]piperazine, and bis[2-(1-piperazinyl)ethyl]amine, pentaethylene hexamine (PEHA) consisting of a mixture of 1,4,7,10,13,16-hexaazahexadecane, N,N,N' N'-tetrakis(2-aminoethyl)-1,2-ethanediamine, N,N-bis(2-aminoethyl)-N'-[2-[(2-aminoethyl)amino]ethyl]-1,2-ethanedi amine, 1-[2-[2-[2-[2-[2-[(2-aminoethyl)amino]ethyl]amino]ethyl]amino]ethyl]p iperazine, 1-[2-[2-[2-[bis(2-aminoethyl)amino]ethyl]amino]ethyl]piperazine, and N,N'-bis[2-(1-piperazinyl)ethyl]-1,2-ethanediamine, hexaethylene heptamine (HEHA) consisting of a mixture of 1,4,7,10,13,16,19-heptaazanonadecane, N-[2-[(2-aminoethyl)amino]ethyl]-N,N',N'-tris(2-aminoethyl)-1,2-etha nediamine, 1-[2-[2-[2-[2-[2-[2-[(2-aminoethyl)amino]ethyl]amino]ethyl]amino]ethy l]amino]ethyl]piperazine, and N-(2-aminoethyl)-N,N'-bis[2-(1-piperazinyl)ethyl]-1,2-ethanediamine, and trade name "Poly-8" which is polyethylene polyamine with 8 or more amino groups (manufactured by Tosoh Corporation).

In the present invention, the amine compound (D) may be commercially available or synthesized through a well-known method, and is not particularly limited. In addition, the purity of the amine compound (D) is not particularly limited, but is preferably 95% or higher and particularly preferably 99% or higher. If the purity falls below 95%, there is a concern that the amount of carbon dioxide absorbed may decrease.

In the present invention, when the composition for carbon dioxide separation use contains the amine compound (D), the mass of the amine compound (D) in the total mass of the above-described amine compound (A), amine compound (B), amine compound (C), and amine compound (D) is not particularly limited. However, in terms of excellent carbon dioxide emission efficiency, the mass thereof is preferably 1 to 50 mass%, more preferably 1 to 30 mass%, and more preferably 1 to 20 mass%.

Next, the method of separating carbon dioxide using the above-described composition for carbon dioxide separation use will be described.

The carbon dioxide separation method of the present invention includes a step of bringing a gas containing carbon dioxide into contact with the above-described composition for carbon dioxide separation use to cause the carbon dioxide to be absorbed in the composition for carbon dioxide separation use. In addition, the carbon dioxide separation method of the present invention may include, after the step, a step of heating and/or depressurizing the composition for carbon dioxide separation use to emit carbon dioxide absorbed in the composition for carbon dioxide separation use.

In the carbon dioxide separation method of the present invention, there is no particular restriction on the method for bringing a gas containing carbon dioxide into contact with the composition for carbon dioxide separation use of the present invention, and any well-known method can be used. Examples of well-known methods include a bubbling method and a counter contact method using a packed or a plate column.

In the carbon dioxide separation method of the present invention, the temperature at which the gas containing carbon dioxide is absorbed in the composition for carbon dioxide separation use of the present invention is not particularly limited, but can be usually within a range of 0°C to 50°C, for example.

In the carbon dioxide separation method of the present invention, the temperature at which carbon dioxide is emitted from the composition for carbon dioxide separation use of the present invention is not particularly limited, and can be usually within a range of 60°C to 150°C, for example. However, in terms of energy reduction, it is preferable to set the temperature thereof to 100°C or lower.

In addition, the composition for carbon dioxide separation use of the present invention can be used in a carbon dioxide chemical absorption method as a carbon dioxide absorption and emission agent which is obtained by carrying or attaching the composition onto an arbitrary carrier.

The chemical absorption method refers to a method for bringing a gas containing carbon dioxide into contact with the above-described composition for carbon dioxide separation use to cause the carbon dioxide to be absorbed therein and then emitting the absorbed carbon dioxide through heating and/or depressurizing. In this chemical absorption method, the temperature at which carbon dioxide is emitted is generally 100°C or higher, but when the composition for carbon dioxide separation use of the present invention is used, there are no particular temperature restrictions and the temperature may be lower than 100°C.

The carrier is not particularly limited, but can be, for example, silica, alumina, magnesia, porous glass, activated carbon, polymethyl methacrylate-based porous resins, and fiber.

The silica can be crystalline or amorphous, and various types of silica such as zeolitic silica and mesoporous silica which have pores are known. There are no particular restrictions on silica that can be used in the carbon dioxide absorption and emission agent of the present invention, and any industrially distributed silica can be used, but silica with a large surface area is preferable.

The amount of composition for carbon dioxide separation use carried in the carbon dioxide absorption and emission agent using the carrier of the present invention based on the total mass of the carrier with the composition for carbon dioxide separation use carried is preferably 5 to 70 mass% and still more preferably 10 to 60 mass% in terms of the amount of carbon dioxide absorbed and an excellent operation of carrying the composition for carbon dioxide separation use.

The carbon dioxide absorption and emission agent using the carrier of the present invention is applicable to carbon dioxide separation methods widely known as solid absorption methods. The solid absorption method refers to a method for bringing a gas containing carbon dioxide into contact with the carbon dioxide separation agent to cause the carbon dioxide to be absorbed therein and then emitting the absorbed carbon dioxide at a high temperature or through depressurizing. In the solid absorption method, the temperature at which carbon dioxide is emitted is generally 100°C or higher, but when the carbon dioxide separation composition of the present invention is used, there are no particular temperature restrictions and the temperature may be lower than 100°C.

The above-described gas containing carbon dioxide may be pure carbon dioxide gas or a mixed gas containing carbon dioxide and other gases. Examples of the other gases include, but not particularly limited to, atmospheric air, nitrogen, oxygen, hydrogen, argon, neon, helium, carbon monoxide, steam, methane, and nitrogen oxides.

There are no particular restrictions on the mixed gas applicable to the carbon dioxide separation method of the present invention as long as the mixed gas contains carbon dioxide, but in order to improve the separation performance between carbon dioxide and other gases, it is desirable that the concentration of carbon dioxide be preferably of 5 to 50 volume% and more preferably 10 to 30 volume%.

In the carbon dioxide separation method of the present invention, additional steps other than the above-described steps (the absorption step and the emission step) may be absolutely acceptable. For example, a cooling step, a heating step, a washing step, an extraction step, an ultrasonic treatment step, a distillation step, a filtration step, and other chemical treatment steps can be appropriately carried out.

The carbon dioxide separation method of the present invention is not particularly limited, but is applicable to, for example, separation of carbon dioxide (CO₂) from combustion exhaust gases generated in thermal power plants, steel plants, cement plants, and the like, or separation of carbon dioxide (CO₂) from steam reformed gas obtained in a steam reforming process.

### Examples

Hereinafter, the present invention will be described with examples, but the present invention is not to be construed as limited thereto.

### [Example 1]

27 g of N,N,N',N",N"-pentamethyldiethylenetriamine (manufactured by Tokyo Chemical Industry Co., Ltd.), 10 g of piperazine (manufactured by Tokyo Chemical Industry Co., Ltd., anhydrous product), and 63 g of pure water were mixed together and stirred to obtain a composition for carbon dioxide separation use (100 g). This was placed in a 200 mL gas absorption bottle, and the temperature was controlled to 40°C in a water bath. A gas flow mixture of carbon dioxide gas at 140 mL/min and nitrogen gas at 560 mL/min (hereinafter referred to as "main gas flow mixture") was blown into the composition for carbon dioxide separation use, and the carbon dioxide gas absorption rate was measured using a gas flow meter and a carbon dioxide concentration meter. The result was that the carbon dioxide gas absorption rate per unit time for 30 minutes immediately after the start of blowing of the main gas flow mixture was 165 mL/min per liter of the composition for carbon dioxide separation use.

Next, the temperature of the above-described gas absorption bottle was controlled to 70°C, and the emission rate of carbon dioxide gas was measured using a gas flow meter and a carbon dioxide concentration meter. The carbon dioxide gas emission rate per unit time for 30 minutes immediately after the start of the blowing of the main gas flow mixture was 59.0 mL/min per liter of the composition for carbon dioxide separation use.

### [Example 2]

29 g of N,N,N',N",N"-pentamethyldiethylenetriamine (manufactured by Tokyo Chemical Industry Co., Ltd.), 11 g of piperazine (manufactured by Tokyo Chemical Industry Co., Ltd., anhydrous product), and 60 g of pure water were mixed together and stirred to obtain a composition for carbon dioxide separation use (100 g). The carbon dioxide gas absorption rate and the carbon dioxide gas emission rate of the composition for carbon dioxide separation use were measured through the same operation as in Example 1. The carbon dioxide gas absorption rate per unit time for 30 minutes immediately after the start of the blowing of a main gas flow mixture was 185 mL/min per liter of the composition for carbon dioxide separation use. The carbon dioxide gas emission rate per unit time for 30 minutes immediately after the start of the blowing of the main gas flow mixture was 66.8 mL/min per liter of the composition for carbon dioxide separation use.

### [Example 3]

27 g of N,N,N',N",N"-pentamethyldiethylenetriamine (manufactured by Tokyo Chemical Industry Co., Ltd.), 13 g of piperazine (manufactured by Tokyo Chemical Industry Co., Ltd., anhydrous product), and 60 g of pure water were mixed together and stirred to obtain a composition for carbon dioxide separation use (100 g). The carbon dioxide gas absorption rate and the carbon dioxide gas emission rate of the composition for carbon dioxide separation use were measured through the same operation as in Example 1. The carbon dioxide gas absorption rate per unit time for 30 minutes immediately after the start of the blowing of a main gas flow mixture was 194 mL/min per liter of the composition for carbon dioxide separation use. The carbon dioxide gas emission rate per unit time for 30 minutes immediately after the start of the blowing of the main gas flow mixture was 59.8 mL/min per liter of the composition for carbon dioxide separation use.

### [Example 4]

20 g of N,N,N',N",N"-pentamethyldiethylenetriamine (manufactured by Tokyo Chemical Industry Co., Ltd.), 15 g of piperazine (manufactured by Tokyo Chemical Industry Co., Ltd., anhydrous product), and 65 g of pure water were mixed together and stirred to obtain a composition for carbon dioxide separation use (100 g). The carbon dioxide gas absorption rate and the carbon dioxide gas emission rate of the composition for carbon dioxide separation use were measured through the same operation as in Example 1. The carbon dioxide gas absorption rate per unit time for 30 minutes immediately after the start of the blowing of a main gas flow mixture was 195 mL/min per liter of the composition for carbon dioxide separation use. The carbon dioxide gas emission rate per unit time for 30 minutes immediately after the start of the blowing of the main gas flow mixture was 46.9 mL/min per liter of the composition for carbon dioxide separation use.

### [Example 5]

36 g of N,N,N',N",N"-pentamethyldiethylenetriamine (manufactured by Tokyo Chemical Industry Co., Ltd.), 14 g of piperazine (manufactured by Tokyo Chemical Industry Co., Ltd., anhydrous product), and 50 g of pure water were mixed together and stirred to obtain a composition for carbon dioxide separation use (100 g). The carbon dioxide gas absorption rate and the carbon dioxide gas emission rate of the composition for carbon dioxide separation use were measured through the same operation as in Example 1. The carbon dioxide gas absorption rate per unit time for 30 minutes immediately after the start of the blowing of a main gas flow mixture was 200 mL/min per liter of the composition for carbon dioxide separation use. The carbon dioxide gas emission rate per unit time for 30 minutes immediately after the start of the blowing of the main gas flow mixture was 86.9 mL/min per liter of the composition for carbon dioxide separation use.

### [Example 6]

30 g of N,N,N',N",N"-pentamethyldiethylenetriamine (manufactured by Tokyo Chemical Industry Co., Ltd.), 5.0 g of piperazine (manufactured by Tokyo Chemical Industry Co., Ltd., anhydrous product), and 65 g of pure water were mixed together and stirred to obtain a composition for carbon dioxide separation use (100 g). The carbon dioxide gas absorption rate and the carbon dioxide gas emission rate of the composition for carbon dioxide separation use were measured through the same operation as in Example 1. The carbon dioxide gas absorption rate per unit time for 30 minutes immediately after the start of the blowing of a main gas flow mixture was 126 mL/min per liter of the composition for carbon dioxide separation use. The carbon dioxide gas emission rate per unit time for 30 minutes immediately after the start of the blowing of the main gas flow mixture was 66.4 mL/min per liter of the composition for carbon dioxide separation use.

### [Example 7]

20 g of N,N,N',N",N"-pentamethyldiethylenetriamine (manufactured by Tokyo Chemical Industry Co., Ltd.), 2.1 g of piperazine (manufactured by Tokyo Chemical Industry Co., Ltd., anhydrous product), and 77.9 g of pure water were mixed together and stirred to obtain a composition for carbon dioxide separation use (100 g). The carbon dioxide gas absorption rate and the carbon dioxide gas emission rate of the composition for carbon dioxide separation use were measured through the same operation as in Example 1. The carbon dioxide gas absorption rate per unit time for 30 minutes immediately after the start of the blowing of a main gas flow mixture was 124 mL/min per liter of the composition for carbon dioxide separation use. The carbon dioxide gas emission rate per unit time for 30 minutes immediately after the start of the blowing of the main gas flow mixture was 49.5 mL/min per liter of the composition for carbon dioxide separation use.

### [Example 8]

27 g of 1-(2-dimethylaminoethyl)-4-methylpiperazine (manufactured by Tokyo Chemical Industry Co., Ltd.), 10 g of piperazine (manufactured by Tokyo Chemical Industry Co., Ltd., anhydrous product), and 63 g of pure water were mixed together and stirred to obtain a composition for carbon dioxide separation use (100 g). The carbon dioxide gas absorption rate and the carbon dioxide gas emission rate of the composition for carbon dioxide separation use were measured through the same operation as in Example 1. The carbon dioxide gas absorption rate per unit time for 30 minutes immediately after the start of the blowing of a main gas flow mixture was 154 mL/min per liter of the composition for carbon dioxide separation use. The carbon dioxide gas emission rate per unit time for 30 minutes immediately after the start of the blowing of the main gas flow mixture was 55.8 mL/min per liter of the composition for carbon dioxide separation use.

### [Example 9]

34 g of 2-[[2-(dimethylamino)ethyl]methylamino]ethanol (manufactured by Tokyo Chemical Industry Co., Ltd.), 10 g of piperazine (manufactured by Tokyo Chemical Industry Co., Ltd., anhydrous product), and 56 g of pure water were mixed together and stirred to obtain a composition for carbon dioxide separation use (100 g). The carbon dioxide gas absorption rate and the carbon dioxide gas emission rate of the composition for carbon dioxide separation use were measured through the same operation as in Example 1. The carbon dioxide gas absorption rate per unit time for 30 minutes immediately after the start of the blowing of a main gas flow mixture was 163 mL/min per liter of the composition for carbon dioxide separation use. The carbon dioxide gas emission rate per unit time for 30 minutes immediately after the start of the blowing of the main gas flow mixture was 46.8 mL/min per liter of the composition for carbon dioxide separation use.

### [Example 10]

37 g of bis(2-dimethylaminoethyl) ether (manufactured by Tokyo Chemical Industry Co., Ltd.), 10 g of piperazine (manufactured by Tokyo Chemical Industry Co., Ltd., anhydrous product), and 53 g of pure water were mixed together and stirred to obtain a composition for carbon dioxide separation use (100 g). The carbon dioxide gas absorption rate and the carbon dioxide gas emission rate of the composition for carbon dioxide separation use were measured through the same operation as in Example 1. The carbon dioxide gas absorption rate per unit time for 30 minutes immediately after the start of the blowing of a main gas flow mixture was 184 mL/min per liter of the composition for carbon dioxide separation use. The carbon dioxide gas emission rate per unit time for 30 minutes immediately after the start of the blowing of the main gas flow mixture was 81.5 mL/min per liter of the composition for carbon dioxide separation use.

### [Example 11]

27 g of N,N,N',N'-tetramethylethylenediamine (manufactured by Tokyo Chemical Industry Co., Ltd.), 10 g of piperazine (manufactured by Tokyo Chemical Industry Co., Ltd., anhydrous product), and 63 g of pure water were mixed together and stirred to obtain a composition for carbon dioxide separation use (100 g). The carbon dioxide gas absorption rate and the carbon dioxide gas emission rate of the composition for carbon dioxide separation use were measured through the same operation as in Example 1. The carbon dioxide gas absorption rate per unit time for 30 minutes immediately after the start of the blowing of a main gas flow mixture was 175 mL/min per liter of the composition for carbon dioxide separation use. The carbon dioxide gas emission rate per unit time for 30 minutes immediately after the start of the blowing of the main gas flow mixture was 41.1 mL/min per liter of the composition for carbon dioxide separation use.

### [Example 12]

27 g of N,N,N',N",N"',N"'-hexamethyltriethylenetetramine (manufactured by Tokyo Chemical Industry Co., Ltd.), 10 g of piperazine (manufactured by Tokyo Chemical Industry Co., Ltd., anhydrous product), and 63 g of pure water were mixed together and stirred to obtain a composition for carbon dioxide separation use (100 g). The carbon dioxide gas absorption rate and the carbon dioxide gas emission rate of the composition for carbon dioxide separation use were measured through the same operation as in Example 1. The carbon dioxide gas absorption rate per unit time for 30 minutes immediately after the start of the blowing of a main gas flow mixture was 158 mL/min per liter of the composition for carbon dioxide separation use. The carbon dioxide gas emission rate per unit time for 30 minutes immediately after the start of the blowing of the main gas flow mixture was 40.1 mL/min per liter of the composition for carbon dioxide separation use.

### [Example 13]

31 g of N,N,N',N",N"-pentamethyldipropylenetriamine (manufactured by Tokyo Chemical Industry Co., Ltd.), 10 g of piperazine (manufactured by Tokyo Chemical Industry Co., Ltd., anhydrous product), and 59 g of pure water were mixed together and stirred to obtain a composition for carbon dioxide separation use (100 g). The carbon dioxide gas absorption rate and the carbon dioxide gas emission rate of the composition for carbon dioxide separation use were measured through the same operation as in Example 1. The carbon dioxide gas absorption rate per unit time for 30 minutes immediately after the start of the blowing of a main gas flow mixture was 192 mL/min per liter of the composition for carbon dioxide separation use. The carbon dioxide gas emission rate per unit time for 30 minutes immediately after the start of the blowing of the main gas flow mixture was 56.9 mL/min per liter of the composition for carbon dioxide separation use.

### [Example 14]

34 g of N-(2-hydroxypropyl)-N,N',N",N"-tetramethyldiethylenetriamine (manufactured by Tosoh Corporation), 10 g of piperazine (manufactured by Tokyo Chemical Industry Co., Ltd., anhydrous product), and 56 g of pure water were mixed together and stirred to obtain a composition for carbon dioxide separation use (100 g). The carbon dioxide gas absorption rate and the carbon dioxide gas emission rate of the composition for carbon dioxide separation use were measured through the same operation as in Example 1. The carbon dioxide gas absorption rate per unit time for 30 minutes immediately after the start of the blowing of a main gas flow mixture was 155 mL/min per liter of the composition for carbon dioxide separation use. The carbon dioxide gas emission rate per unit time for 30 minutes immediately after the start of the blowing of the main gas flow mixture was 57.6 mL/min per liter of the composition for carbon dioxide separation use.

### [Example 15]

20 g of N,N,N',N",N"-pentamethyldiethylenetriamine (manufactured by Tokyo Chemical Industry Co., Ltd.), 14 g of piperazine (manufactured by Tokyo Chemical Industry Co., Ltd., anhydrous product), 20 g of 1,4-diazabicyclo[2, 2, 2]octane-2-methanol (manufactured by Tosoh Corporation), and 46 g of pure water were mixed together and stirred to obtain a composition for carbon dioxide separation use (100 g). The carbon dioxide gas absorption rate and the carbon dioxide gas emission rate of the composition for carbon dioxide separation use were measured through the same operation as in Example 1. The carbon dioxide gas absorption rate per unit time for 30 minutes immediately after the start of the blowing of a main gas flow mixture was 194 mL/min per liter of the composition for carbon dioxide separation use. The carbon dioxide gas emission rate per unit time for 30 minutes immediately after the start of the blowing of the main gas flow mixture was 70.9 mL/min per liter of the composition for carbon dioxide separation use.

### [Example 16]

13 g of N,N,N',N",N"-pentamethyldiethylenetriamine (manufactured by Tokyo Chemical Industry Co., Ltd.), 14 g of piperazine (manufactured by Tokyo Chemical Industry Co., Ltd., anhydrous product), 13 g of 1,4-diazabicyclo[2, 2, 2]octane-2-methanol (manufactured by Tosoh Corporation), and 60 g of pure water were mixed together and stirred to obtain a composition for carbon dioxide separation use (100 g). The carbon dioxide gas absorption rate and the carbon dioxide gas emission rate of the composition for carbon dioxide separation use were measured through the same operation as in Example 1. The carbon dioxide gas absorption rate per unit time for 30 minutes immediately after the start of the blowing of a main gas flow mixture was 187 mL/min per liter of the composition for carbon dioxide separation use. The carbon dioxide gas emission rate per unit time for 30 minutes immediately after the start of the blowing of the main gas flow mixture was 49.8 mL/min per liter of the composition for carbon dioxide separation use.

### [Example 17]

13 g of N,N,N',N",N"-pentamethyldiethylenetriamine (manufactured by Tokyo Chemical Industry Co., Ltd.), 14 g of piperazine (manufactured by Tokyo Chemical Industry Co., Ltd., anhydrous product), 13 g of 1,4-diazabicyclo[2.2.2]octane (manufactured by Tosoh Corporation), and 60 g of pure water were mixed together and stirred to obtain a composition for carbon dioxide separation use (100 g). The carbon dioxide gas absorption rate and the carbon dioxide gas emission rate of the composition for carbon dioxide separation use were measured through the same operation as in Example 1. The carbon dioxide gas absorption rate per unit time for 30 minutes immediately after the start of the blowing of a main gas flow mixture was 190 mL/min per liter of the composition for carbon dioxide separation use. The carbon dioxide gas emission rate per unit time for 30 minutes immediately after the start of the blowing of the main gas flow mixture was 49.1 mL/min per liter of the composition for carbon dioxide separation use.

### [Comparative Example 1]

30 g of N,N,N',N",N"-pentamethyldiethylenetriamine (manufactured by Tokyo Chemical Industry Co., Ltd.) and 70 of pure water were mixed together and stirred to obtain a composition for carbon dioxide separation use (100 g). The carbon dioxide gas absorption rate and the carbon dioxide gas emission rate of the composition for carbon dioxide separation use were measured through the same operation as in Example 1. The carbon dioxide gas absorption rate per unit time for 30 minutes immediately after the start of the blowing of a main gas flow mixture was 33.5 mL/min per liter of the composition for carbon dioxide separation use. The carbon dioxide gas emission rate per unit time for 30 minutes immediately after the start of the blowing of the main gas flow mixture was 5.37 mL/min per liter of the composition for carbon dioxide separation use.

### [Comparative Example 2]

30 g of 1-(2-dimethylaminoethyl)-4-methylpiperazine (manufactured by Tokyo Chemical Industry Co., Ltd.) and 70 g of pure water were mixed together and stirred to obtain a composition for carbon dioxide separation use (100 g). The carbon dioxide gas absorption rate and the carbon dioxide gas emission rate of the composition for carbon dioxide separation use were measured through the same operation as in Example 1. The carbon dioxide gas absorption rate per unit time for 30 minutes immediately after the start of the blowing of a main gas flow mixture was 25.1 mL/min per liter of the composition for carbon dioxide separation use. The carbon dioxide gas emission rate per unit time for 30 minutes immediately after the start of the blowing of the main gas flow mixture was 14.5 mL/min per liter of the composition for carbon dioxide separation use.

### [Comparative Example 3]

30 g of 2-[[2-(dimethylamino)ethyl]methylamino]ethanol (manufactured by Tokyo Chemical Industry Co., Ltd.) and 70 g of pure water were mixed together and stirred to obtain a composition for carbon dioxide separation use (100 g). The carbon dioxide gas absorption rate and the carbon dioxide gas emission rate of the composition for carbon dioxide separation use were measured through the same operation as in Example 1. The carbon dioxide gas absorption rate per unit time for 30 minutes immediately after the start of the blowing of a main gas flow mixture was 40.3 mL/min per liter of the composition for carbon dioxide separation use. The carbon dioxide gas emission rate per unit time for 30 minutes immediately after the start of the blowing of the main gas flow mixture was 28.7 mL/min per liter of the composition for carbon dioxide separation use.

### [Comparative Example 4]

30 g of bis(2-dimethylaminoethyl) ether (manufactured by Tokyo Chemical Industry Co., Ltd.) and 70 g of pure water were mixed together and stirred to obtain a composition for carbon dioxide separation use (100 g). The carbon dioxide gas absorption rate and the carbon dioxide gas emission rate of the composition for carbon dioxide separation use were measured through the same operation as in Example 1. The carbon dioxide gas absorption rate per unit time for 30 minutes immediately after the start of the blowing of a main gas flow mixture was 34.6 mL/min per liter of the composition for carbon dioxide separation use. The carbon dioxide gas emission rate per unit time for 30 minutes immediately after the start of the blowing of the main gas flow mixture was 16.4 mL/min per liter of the composition for carbon dioxide separation use.

### [Comparative Example 5]

30 g of piperazine (manufactured by Tokyo Chemical Industry Co., Ltd., anhydrous product) and 70 g of pure water were mixed together and stirred to obtain a composition for carbon dioxide separation use (100 g). The carbon dioxide gas absorption rate and the carbon dioxide gas emission rate of the composition for carbon dioxide separation use were measured through the same operation as in Example 1. The carbon dioxide gas absorption rate per unit time for 30 minutes immediately after the start of the blowing of a main gas flow mixture was 219 mL/min per liter of the composition for carbon dioxide separation use. The carbon dioxide gas emission rate per unit time for 30 minutes immediately after the start of the blowing of the main gas flow mixture was 13.6 mL/min per liter of the composition for carbon dioxide separation use.

### [Comparative Example 6]

10 g of N,N,N',N",N"-pentamethyldiethylenetriamine (manufactured by Tokyo Chemical Industry Co., Ltd.), 10 g of piperazine (manufactured by Tokyo Chemical Industry Co., Ltd., anhydrous product), and 80 g of pure water were mixed together and stirred to obtain a composition for carbon dioxide separation use (100 g). The carbon dioxide gas absorption rate and the carbon dioxide gas emission rate of the composition for carbon dioxide separation use were measured through the same operation as in Example 1. The carbon dioxide gas absorption rate per unit time for 30 minutes immediately after the start of the blowing of a main gas flow mixture was 144 mL/min per liter of the composition for carbon dioxide separation use. The carbon dioxide gas emission rate per unit time for 30 minutes immediately after the start of the blowing of the main gas flow mixture was 28.0 mL/min per liter of the composition for carbon dioxide separation use.

### [Comparative Example 7]

20 g of N,N,N',N",N"-pentamethyldiethylenetriamine (manufactured by Tokyo Chemical Industry Co., Ltd.), 1.6 g of piperazine (manufactured by Tokyo Chemical Industry Co., Ltd., anhydrous product), and 78.4 g of pure water were mixed together and stirred to obtain a composition for carbon dioxide separation use (100 g). The carbon dioxide gas absorption rate and the carbon dioxide gas emission rate of the composition for carbon dioxide separation use were measured through the same operation as in Example 1. The carbon dioxide gas absorption rate per unit time for 30 minutes immediately after the start of the blowing of a main gas flow mixture was 100 mL/min per liter of the composition for carbon dioxide separation use. The carbon dioxide gas emission rate per unit time for 30 minutes immediately after the start of the blowing of the main gas flow mixture was 39.8 mL/min per liter of the composition for carbon dioxide separation use.

### [Comparative Example 8]

15 g of bis(3-diaminopropyl)amine (manufactured by Tokyo Chemical Industry Co., Ltd.), 15 g of piperazine (manufactured by Tokyo Chemical Industry Co., Ltd., anhydrous product), and 70 g of pure water were mixed together and stirred to obtain a composition for carbon dioxide separation use (100 g). The carbon dioxide gas absorption rate and the carbon dioxide gas emission rate of the composition for carbon dioxide separation use were measured through the same operation as in Example 1. The carbon dioxide gas absorption rate per unit time for 30 minutes immediately after the start of the blowing of a main gas flow mixture was 203 mL/min per liter of the composition for carbon dioxide separation use. The carbon dioxide gas emission rate per unit time for 30 minutes immediately after the start of the blowing of the main gas flow mixture was 27.7 mL/min per liter of the composition for carbon dioxide separation use.

### [Comparative Example 9]

29 g of bis(3-diaminopropyl)amine (manufactured by Tokyo Chemical Industry Co., Ltd.), 10 g of piperazine (manufactured by Tokyo Chemical Industry Co., Ltd., anhydrous product), and 61 g of pure water were mixed together and stirred to obtain a composition for carbon dioxide separation use (100 g). The carbon dioxide gas absorption rate and the carbon dioxide gas emission rate of the composition for carbon dioxide separation use were measured through the same operation as in Example 1. The carbon dioxide gas absorption rate per unit time for 30 minutes immediately after the start of the blowing of a main gas flow mixture was 201 mL/min per liter of the composition for carbon dioxide separation use. The carbon dioxide gas emission rate per unit time for 30 minutes immediately after the start of the blowing of the main gas flow mixture was 36.0 mL/min per liter of the composition for carbon dioxide separation use.

**[Table 1]**

| | | Example 1 | Example 2 | Example 3 | Example 4 | Example 5 | Example 6 | Example 7 |
|---|---|---|---|---|---|---|---|---|
| Composition for carbon dioxide separation use | | | | | | | | |
| Amine compound (A) | | | | | | | | |
| 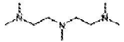 | (mass %) | 27 | 29 | 27 | 20 | 36 | 30 | 20 |

| Amine compound (B) | | | | | | | | |
|---|---|---|---|---|---|---|---|---|
| 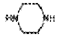 | (mass %) | 10 | 11 | 13 | 15 | 14 | 5.0 | 2.1 |
| Solvent | | | | | | | | |
| Water | (mass %) | 63 | 60 | 60 | 65 | 50 | 65 | 77.9 |
| Number of moles of N contained in amine compounds (A) and (C) / number of moles of N contained in amine compound (B) | (times) | 2.0 | 2.0 | 1.5 | 1.0 | 2.0 | 4.5 | 7.1 |
| CO₂ absorption performance | emission | | | | | | | |
| CO₂ absorption rate | (mL/L·min) | 165 | 185 | 194 | 195 | 200 | 126 | 124 |
| CO₂ emission rate | (mL/L·min) | 59.0 | 66.8 | 59.8 | 46.9 | 86.9 | 66.4 | 49.5 |
| Precipitation (no=o, yes=×) | | ○ | ○ | ○ | ○ | ○ | ○ | ○ |

**[Table 2]**

| | | Example 8 | Example 9 | Example 10 | Example 11 | Example 12 | Example 13 | Example 14 |
|---|---|---|---|---|---|---|---|---|
| Composition for carbon dioxide separation use | | | | | | | | |
| Amine compound (A) | | | | | | | | |
| 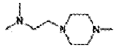 | (mass %) | 27 | | | | | | |
| 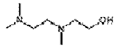 | (mass %) | | 34 | | | | | |
| 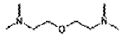 | (mass %) | | | 37 | | | | |
| 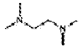 | (mass %) | | | | 27 | | | |
| 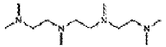 | (mass %) | | | | | 27 | | |
| 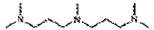 | (mass %) | | | | | | 31 | |
| 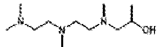 | (mass %) | | | | | | | 34 |

| Amine compound (B) | | | | | | | | |
|---|---|---|---|---|---|---|---|---|
| 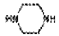 | (mass %) | 10 | 10 | 10 | 10 | 10 | 10 | 10 |

| Solvent | | | | | | | | |
|---|---|---|---|---|---|---|---|---|
| Water | (mass %) | 63 | 56 | 53 | 63 | 63 | 59 | 56 |
| Number of moles of N contained in amine compounds (A) and (C) / number of moles of N contained in amine compound (B) | (times) | 2.0 | 2.0 | 2.0 | 2.0 | 2.0 | 2.0 | 2.0 |

| CO₂ absorption emission performance | | | | | | | | |
|---|---|---|---|---|---|---|---|---|
| CO₂ absorption rate | (mL/L·min) | 154 | 163 | 184 | 175 | 158 | 192 | 155 |
| CO₂ emission rate | (mL/L·min) | 55.8 | 46.8 | 81.5 | 41.1 | 40.1 | 56.9 | 57.6 |
| Precipitation (no=○, yes=×) | | ○ | ○ | ○ | ○ | ○ | ○ | ○ |

**[Table 3]**

| | | Example 15 | Example 16 | Example 17 |
|---|---|---|---|---|
| Composition for carbon dioxide separation use | | | | |
| Amine compound (A) | | | | |
| 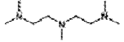 | (mass %) | 20 | 13 | 13 |

| Amine compound (B) | | | | |
|---|---|---|---|---|
| 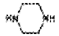 | (mass %) | 14 | 14 | 14 |

| Amine compound (C) | | | | |
|---|---|---|---|---|
| 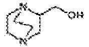 | (mass %) | 20 | 13 | |
| 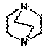 | (mass %) | | | 13 |

| Solvent | | | | |
|---|---|---|---|---|
| Water | (mass %) | 46 | 60 | 60 |
| Number of moles of N contained in amine compounds (A) and (C) / number of moles of N contained in amine compound (B) | (times) | 1.9 | 1.3 | 1.4 |

| CO₂ absorption emission performance | | | | |
|---|---|---|---|---|
| CO₂ absorption rate | (mL/L·min) | 194 | 187 | 190 |
| CO₂ emission rate | (mL/L·min) | 70.9 | 49.8 | 49.1 |
| Precipitation (no=○, yes=×) | | ○ | ○ | ○ |

**[Table 4]**

| | | Comparative Example 1 | Comparative Example 2 | Comparative Example 3 | Comparative Example 4 | Comparative Example 5 | Comparative Example 6 | Comparative Example 7 |
|---|---|---|---|---|---|---|---|---|
| Composition for carbon dioxide separation use | | | | | | | | |
| Amine compound (A) | | | | | | | | |
| 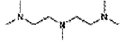 | (mass %) | 30 | | | | | 10 | 20 |
| 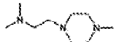 | (mass %) | | 30 | | | | | |
| 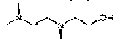 | (mass %) | | | 30 | | | | |
| 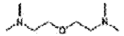 | (mass %) | | | | 30 | | | |

| Amine compound (B) | | | | | | | | |
|---|---|---|---|---|---|---|---|---|
| 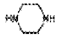 | (mass %) | | | | | 30 | 10 | 1.6 |

| Solvent | | | | | | | | |
|---|---|---|---|---|---|---|---|---|
| Water | (mass %) | 70 | 70 | 70 | 70 | 70 | 80 | 78.4 |
| Number of moles of N contained in amine compounds (A) and (C) / number of moles of N contained in amine compound (B) | (times) | No amine compound (B) | No amine compound (B) | No amine compound (B) | No amine compound (B) | No amine compounds (A) and (C) | 0.75 | 9.3 |

| CO₂ absorption emission performance | | | | | | | | |
|---|---|---|---|---|---|---|---|---|
| CO₂ absorption rate | (mL/L·min) | 33.5 | 25.1 | 40.3 | 34.6 | 219 | 144 | 100 |
| CO₂ emission rate | (mL/L·min) | 5.37 | 14.5 | 28.7 | 16.4 | 13.6 | 28.0 | 39.8 |
| Precipitation (no=○, yes=×) | | ○ | ○ | ○ | ○ | × | ○ | ○ |

**[Table 5]**

| | | Comparative Example 8 | Comparative Example 9 |
|---|---|---|---|
| Composition for carbon dioxide separation use | | | |
| Amine compound (D) | | | |
| 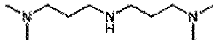 | (mass %) | 15 | 29 |

| Amine compound (B) | | | |
|---|---|---|---|
| 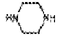 | (mass %) | 15 | 10 |

| Solvent | | | |
|---|---|---|---|
| Water | (mass %) | 70 | 61 |
| Number of moles of N contained in amine compounds (A) and (C) / number of moles of N contained in amine compound (B) | (times) | No amine compounds (A) and (C) | No amine compounds (A) and (C) |

| CO₂ absorption emission performance | | | |
|---|---|---|---|
| CO₂ absorption rate | (mL/L·min) | 203 | 201 |
| CO₂ emission rate | (mL/L·min) | 27.7 | 36.0 |
| Precipitation (no=○, yes=×) | | ○ | ○ |

### [Example 18]

13.5 g of N,N,N',N",N"-pentamethyldiethylenetriamine (manufactured by Tokyo Chemical Industry Co., Ltd.), 5 g of piperazine (manufactured by Tokyo Chemical Industry Co., Ltd., anhydrous product), and 31.5 g of pure water were mixed together and stirred to obtain a composition for carbon dioxide separation use (50 g). This was placed in a 200 mL gas absorption bottle, and the temperature was controlled to 40°C in a water bath. A simulated degradation solution was prepared by blowing a gas flow mixture of carbon dioxide gas at 20 mL/min, nitrogen gas at 170 mL/min, and nitrogen dioxide gas at 10 mL/min (200 mL/min) into the composition for carbon dioxide separation use for 24 hours and replenishing water lost at this time. Subsequently, this simulated degradation solution was then heated in an oil bath at 100°C, and the gas flow mixture of carbon dioxide gas at 140 mL/min and nitrogen gas at 560 mL/min was blown for 1 hour to prepare a simulated degradation lean solution. The temperature of this simulated degradation lean solution was controlled to 40°C in a water bath, the main gas flow mixture was blown, and the same operation as in Example 1 was performed to measure the carbon dioxide gas absorption rate.

As a comparison, the composition for carbon dioxide separation use was heated in an oil bath at 100°C without blowing nitrogen dioxide gas thereinto, and the gas flow mixture of carbon dioxide gas at 140 mL/min and nitrogen gas at 560 mL/min was blown for 1 hour to prepare a lean solution. Next, the temperature of the lean solution was controlled to 40°C in a water bath, the main gas flow mixture was blown, and the same operation as in Example 1 was performed to measure the carbon dioxide gas absorption rate.

When the carbon dioxide gas absorption rate of the lean solution was 100%, the carbon dioxide gas absorption rate of the simulated degradation lean solution was 100%.

### [Comparative Example 10]

7.5 g of bis(3-diaminopropyl)amine (manufactured by Tokyo Chemical Industry Co., Ltd.), 7.5 g of piperazine (manufactured by Tokyo Chemical Industry Co., Ltd., anhydrous product), and 35 g of pure water were mixed together and stirred to obtain a composition for carbon dioxide separation use (50 g). The carbon dioxide gas absorption rate (before and after simulated degradation) of the composition of this comparative example was measured by performing the same operation as in Example 18 except that the composition for carbon dioxide separation use (50 g) of this comparative example was used instead of the composition for carbon dioxide separation use (50 g) used in Example 18. When the carbon dioxide gas absorption rate of a lean solution of the composition for carbon dioxide separation use was 100%, the carbon dioxide gas absorption rate of the simulated degradation lean solution decreased to 89%.

**[Table 6]**

| | | Example 18 | Comparative Example 10 |
|---|---|---|---|
| Composition for carbon dioxide separation use | | | |
| Amine compound (A) | | | |
| 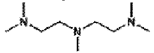 | (mass %) | 27 | |

| Amine compound (D) | | | |
|---|---|---|---|
| 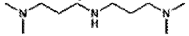 | (mass %) | | 15 |

| Amine compound (B) | | | |
|---|---|---|---|
| 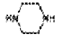 | (mass %) | 10 | 15 |

| Solvent | | | |
|---|---|---|---|
| Water | (mass %) | 63 | 70 |
| Number of moles of N contained in amine compounds (A) and (C) / number of moles of N contained in amine compound (B) | (times) | 2.0 | No amine compounds (A) and (C) |

| CO₂ absorption rate | | | |
|---|---|---|---|
| (Lean solution is 100%) | | | |
| Simulated degradation lean solution | | 100% | 89% |

As is clear from the comparison between the above-described examples and comparative examples, the composition for carbon dioxide separation use of the present invention had a higher CO₂ emission rate and superior CO₂ emission performance compared to conventional compositions for carbon dioxide separation use.

In addition, the composition for carbon dioxide separation use of the present invention had a synergistically higher CO₂ emission rate compared to the compositions for carbon dioxide separation use shown in the comparative examples, and an unexpectedly significant effect can be obtained.

In addition, the composition for carbon dioxide separation use of the present invention had excellent CO₂ emission performance because the number of moles of nitrogen atoms (nitrogen atoms of tertiary amino groups) in the amine compounds (A) and (C) is within a specific range with respect to the number of moles of nitrogen atoms (nitrogen atoms of secondary amino groups) in the amine compound (B).

In addition, it was recognized that the composition for carbon dioxide separation use of the present invention of the present invention exhibited an effect of being less susceptible to a decrease in CO₂ absorption performance compared to the composition for carbon dioxide separation use shown in Comparative Example 10 even when nitrogen oxides are mixed in (Example 18).

Although the present invention has been described in detail and with reference to the specific embodiment, it is clear to those skilled in the art that various changes and modifications can be made without departing from the essence and scope of the present invention.

The entire contents of the specification, claims, drawings, and abstract of Japanese Patent Application No. 2022-068989, filed on April 19, 2022 are incorporated herein by reference as a disclosure of the specification of the present invention.

### Industrial Applicability

The composition for carbon dioxide separation use of the present invention can efficiently separate carbon dioxide in exhaust gases emitted in large amounts from, for example, large-scale thermal power generation.

## Claims

1. A composition for carbon dioxide separation use, comprising:
an amine compound (A) represented by General Formula (1) or (2) below;
an amine compound (B) represented by General Formula (3) below; and
water,
wherein the composition for carbon dioxide separation use may further comprise an amine compound (C) represented by General Formula (4) below,
wherein the number of moles of nitrogen atoms (nitrogen atoms of tertiary amino groups) contained in the amine compounds (A) and (C) is within a range of 1.0 to 8.0 times the number of moles of nitrogen atoms (nitrogen atoms of secondary amino groups) contained in the amine compound (B), 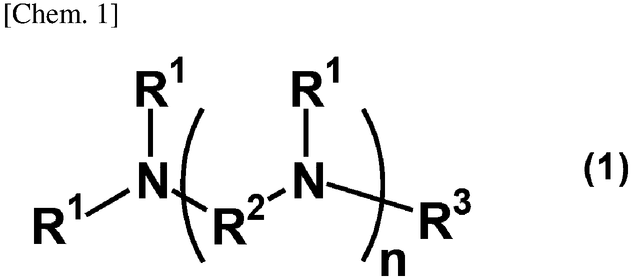 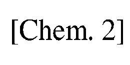 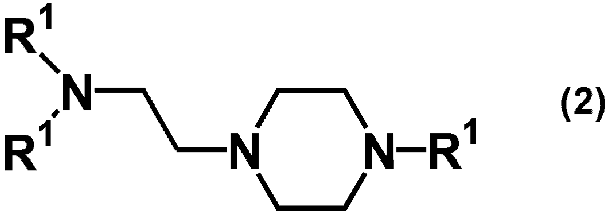
[in General Formulae (1) and (2) above, R¹'s each independently represent a C1-3 alkyl group, R² represents a C2-6 alkylene group or an oxybisalkylene group having a total number of carbon atoms of 2 to 6, R³ represents a C1-3 alkyl, 2-hydroxyethyl, or 2-hydroxypropyl group, and n represents an integer of 1 to 4], 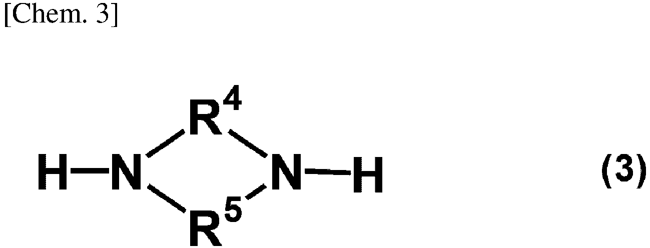
[in General Formula (3) above, R⁴ and R⁵ each independently represent a C2-3 alkylene group], and 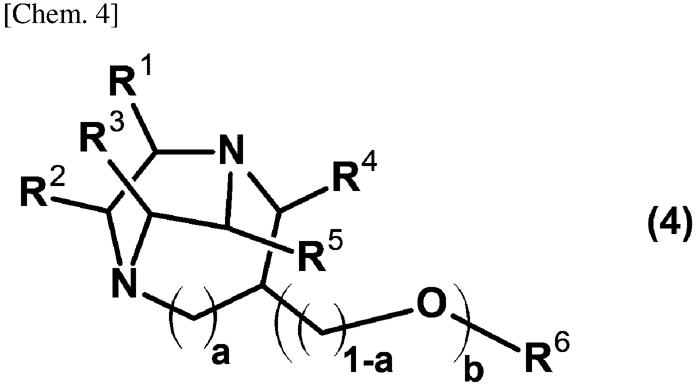
[in General Formula (4) above, R¹ to R⁶ each independently represent a hydrogen atom or a C1-3 alkyl group, and a and b each independently represent 0 or 1].

2. The composition for carbon dioxide separation use according to claim 1,
wherein the above-described amine compound (A) is at least one amine compound (A) selected from the group consisting of N,N,N',N'-tetramethylethylenediamine, N,N,N',N",N"-pentamethyldiethylenetriamine, N,N,N',N",N"-pentamethyldipropylenetriamine, N,N,N',N",N‴,N‴-hexamethyltriethylenetetramine, N,N,N',N'-tetramethylhexylenediamine, 2-[[2-(dimethylamino)ethyl]methylamino]ethanol, bis(2-dimethylaminoethyl) ether, N-(2-hydroxypropyl)-N,N',N",N"-tetramethyldiethylenetriamine, and 1-(2-dimethylaminoethyl)-4-methylpiperazine.

3. The composition for carbon dioxide separation use according to claim 1,
wherein the above-described amine compound (B) is piperazine or homopiperazine.

4. The composition for carbon dioxide separation use according to claim 1,
wherein the above-described amine compound (C) is 1,4-diazabicyclo[2.2.2]octane-2-methanol or 1,4-diazabicyclo [2.2.2] octane.

5. The composition for carbon dioxide separation use according to claim 1,
wherein the concentration of water is 30 to 95 mass% in the entire composition for carbon dioxide separation use.

6. A carbon dioxide separation method comprising:
a step of bringing a gas containing carbon dioxide into contact with the composition for carbon dioxide separation use according to any one of claims 1 to 5 to cause carbon dioxide in the mixed gas to be absorbed in the composition for carbon dioxide separation use.

7. A carbon dioxide separation method comprising:
a step of bringing a gas containing carbon dioxide into contact with the composition for carbon dioxide separation use according to any one of claims 1 to 5 to cause carbon dioxide in the mixed gas to be absorbed in the composition for carbon dioxide separation use; and
a step of heating and/or depressurizing the composition for carbon dioxide separation use that has absorbed carbon dioxide to emit carbon dioxide from the composition for carbon dioxide separation use.
